Europäisches Patentamt

(19) European Patent Office

Office européen des brevets

(11) **EP 1 142 843 A1**

(12) **EUROPÄISCHE PATENTANMELDUNG**

(43) Veröffentlichungstag:
**10.10.2001 Patentblatt 2001/41**

(51) Int Cl.[7]: **C03C 10/12**, C03C 27/12,
E06B 3/66

(21) Anmeldenummer: **01106774.1**

(22) Anmeldetag: **17.03.2001**

| | |
|---|---|
| (84) Benannte Vertragsstaaten:<br>**AT BE CH CY DE DK ES FI FR GB GR IE IT LI LU MC NL PT SE TR**<br>Benannte Erstreckungsstaaten:<br>**AL LT LV MK RO SI** | (72) Erfinder:<br>• **Melson, Sabine, Dr.**<br>**55124 Mainz (DE)**<br>• **Hubert, Stefan**<br>**55270 Engelstadt (DE)**<br>• **Karschti, Thomas**<br>**55257 Budenheim (DE)** |
| (30) Priorität: **08.04.2000 DE 10017699** | |
| (71) Anmelder:<br>• **Schott Glas**<br>**55122 Mainz (DE)**<br>Benannte Vertragsstaaten:<br>**BE DE FR IT NL**<br>• **CARL-ZEISS-STIFTUNG**<br>**trading as SCHOTT GLAS**<br>**55122 Mainz (DE)**<br>Benannte Vertragsstaaten:<br>**GB** | (74) Vertreter: **Fuchs Mehler Weiss & Fritzsche Patentanwälte**<br>**Postfach 46 60**<br>**65036 Wiesbaden (DE)** |

(54) **Verglasung von gegenüber der Umgebung im Weltraum oder in Polarregionen abgekapselten Räumen**

(57)     Derartige extrem hohe Temperaturgradienten liegen beispielsweise bei Raumstationen, Weltraum-Flugkörpern oder Polarstationen vor.

Um eine hohe Temperaturbeständigkeit zu gewährleisten, besteht die Verglasung aus einem Scheibenpaket, bei dem die der Umgebung zugewandte äußere Scheibe aus Glaskeramik besteht.

Vorzugsweise ist die Glaskeramik eine gefloatete Glaskeramik auf der Basis eines gefloateten Alumosilikatglases, wodurch eine sehr geringe Oberflächen-Rauheit gegeben ist, die eine verzerrungsfreie Durchsicht ermöglicht und eine hohe Reinigungsfreundlichkeit gewährleistet.

EP 1 142 843 A1

**Beschreibung**

Die Erfindung bezieht sich auf die Verglasung von gegenüber der Umgebung im Weltraum oder in Polarregionen abgekapselten Räumen, die betrieblich einem extrem hohen Temperaturgradienten ausgesetzt sind, insbesondere für den Einsatz von Sichtfenstern in Raumstationen, Flugkörpern sowie in Polarstationen in arktischen Breiten bzw. in der Antarktis.

Für den Einsatz von Sichtfenstern in Raumstationen bzw. Flugkörpern als Abgrenzung zu den atmosphärischen Bedingungen des Weltalls werden Werkstoffe mit besonderen Eigenschaften benötigt.

Infolge der atmosphärischen Bedingungen, wie z.B. direkte Sonneneinstrahlung oder Schattenseite, können große Temperaturwechsel von $\Delta T \approx 370$ K (Sonnenseite: + 120° C, Schattenseite: - 250° C) auftreten. Hohe Temperaturbelastungen sind auch möglich durch heiße bzw. kalte Abgasströme von startenden, landenden oder vorbeifliegenden Flugkörpern. Bedingt durch örtliche Veränderungen, wie z.B. Rotationen oder schnelle Temperaturwechsel, können auf einem Sichtfenster hohe Temperaturgradienten entstehen. Dadurch können bei ungeeigneter Werkstoffwahl Spannungen entstehen, die zum Bruch des Sichtfensters führen.

Ebenso treten Temperaturgradienten zwischen den Temperaturen auf, die durch die Sichtfenster abgegrenzt werden, z.B. Innenseite der Raumstation zum Weltall. Hier kann ein Temperaturgradient über die Dicke des Sichtfensters von der Temperatur der Raumstation (20° C) zu Temperaturen im Weltall von z.B. - 250° C bzw. + 120° C auftreten.

Nicht ganz so exreme Temperaturgradienten, die aber dennoch eine hohe thermomechanische Beanspruchung der Verglasung bewirken, treten bei der Verglasung von Stationen in der Arktis bzw. der Antarktis auf.

Bei der Weltraumverglasung kommt noch ein weiteres hinzu.

Da die Atmosphäre mit abrasiven Medien, wie z.B. Sand- oder Steinkörpern, Weltraumschrott u.ä. angereichert sein kann, ist eine ausreichende Härte und mechanische Festigkeit der eingesetzten Materialien erforderlich.

Generell muß die Verglasung, das Sichtfenster, eine verzerrungsfreie Durchsicht ermöglichen, sowie leicht zu reinigen sein.

Der Erfindung liegt die Aufgabe zugrunde, eine wirksame Verglasung von gegenüber der Umgebung im Weltraum oder in Polarregionen abgekapselten Räumen zu schaffen, die betrieblich einem extrem hohen Temperaturgradienten ausgesetzt sind.

Die Lösung dieser Aufgabe gelingt durch eine Verglasung, bestehend aus einem Scheibenpaket, bei dem die der Umgebung zugewandte äußere Scheibe aus Glaskeramik besteht.

Vorzugsweise ist dabei die Glaskeramikscheibe transparent ausgebildet, damit sie als Sichtfenster für den betreffenden Raum dienen kann.

Es hat sich gezeigt, daß die Glaskeramik die auftretenden Temperaturgradienten und Temperaturwechsel aushält. Normalerweise wird Glaskeramik als Ofensichtscheibe in Feuerstätten mit Temperaturen bis zu 800° C eingesetzt. Auch die Anwendung als Brandschutzsicherheitsglas ist bekannt. Bei den Gegebenheiten im Weltall bzw. in dem Polgebiet sind jedoch nicht die maximalen Temperaturen entscheidend, sondern die Temperaturschwankungen und Temperaturgradienten, die auf das Material einwirken, was erstaunlicherweise die Glaskeramik aushält.

Die Glaskeramik weist eine harte Oberfläche auf, die eine gute Beständigkeit gegen die ggf. herumfliegenden Abrasivkörper aufweist. Sollte es zu einer Beschädigung der Glaskeramik kommen, so weist sie lediglich Ausmuschelungen, Abplatzungen oder Löcher auf. Sollte es dennoch zu einem Bruch kommen, so zerfällt die Scheibe in große Bruchstücke, die ggf. durch den Rahmenverbund gehalten werden. Eine thermisch vorgespannte Scheibe wäre in diesem Fall ein Sicherheitsrisiko durch die herumfliegenden Bruchstücke.

Die erfindungsgemäße Verglasung besteht typischerweiwse nicht nur aus einer einzelnen Scheibe, sondern aus einem Scheibenpaket. Hierbei ist die leichte Austauschbarkeit der Glaskeramik-Außenscheibe zu gewährleisten, ohne daß das gesamte Scheibenpaket ausgetauscht werden muß. Ein Scheibenpaket kann ähnlich dem eines Isolierglases oder Verbundglases aufgebaut werden, das wärmeisolierend oder schalldämmend wirkt.

Die äußere Glaskeramikscheibe kann, je nach Einsatzfall, plan, verformt oder gebogen sein.

Enthält das Glaskeramikmaterial als Keimbildner $TiO_2$, dann wirkt die Glaskeramikscheibe auch als UV-Blocker, was für die Rauminsassen hinsichtlich des Vermeidens von Strahlenschäden von wesentlichem Vorteil ist.

Die Glaskeramikscheibe ist vorzugsweise mit Beschichtungen unterschiedlicher Wirkungsweise versehen, damit sie z.B.

- eine Entspiegelung bewirken
- wärmereflektierend wirken
- beheizbar sind
- ein UV-Filter bilden, falls der eigene UV-Block nicht ausreichend ist.

Eine herkömmliche Glaskeramikscheibe weist üblicherweise eine relativ rauhe Oberfläche mit einem $R_a$ von 0,35 µm bis 0,55 µm auf.

Dadurch ist eine relativ große Streuwirkung vorhanden, die eine verzerrungsfreie Durchsicht beeinträgt. Außerdem ist dadurch die Reinigung der Glaskeramikscheibe schwierig.

Gemäß einer Ausgestaltung der Erfindung wird eine verzerrungsfreie Durchsicht und eine hohe Reinigungsfreundlichkeit ermöglicht, wenn die Glaskeramikscheibe eine porenfreie Oberfläche aufweist.

Diese Porenfreiheit kann entweder, mit erhöhtem Aufwand, durch eine Glaskeramikscheibe mit polierter Oberfläche oder durch eine gefloatete Glaskeramik erreicht werden, die gemäß einer Weiterbildung der Erfindung vorzugsweise durch eine gefloatete Glaskeramik gemäß Anspruch 2 realisiert ist.

Diese gefloatete Glaskeramik weist eine besonders niedrige Rauheit mit einem Mittenrauhwert $R_a$ ≤ 0,02 μm bzw. einem quadratischen Mittenrauhwert $R_q$ ≤ 0,01 μm auf und besitzt damit ein geringes störendes Streuverhalten bzw. eine hohe Reinigungsfreundlichkeit.

Die Begriffe der Oberflächenrauheit werden insbesondere in der DIN 4762 näher erläutert. So ist der Mittenrauhwert $R_a$ das arithmetische Mittel von den absoluten Höhenabweichungen der mittleren Ebene der arithmetrische Mittelwert der absoluten Beträge der Abstände des Istprofils vom mittleren Profil. Dieses mittlere Profil ergibt sich dadurch, daß man durch das Istprofil innerhalb einer Bezugsstrecke ein Profil so legt, daß die Summe der werkstofferfüllten Flächenstücke des Istprofils oberhalb und die Summe der werkstofffreien Flächenstücke unterhalb gleich groß sind. In Anlehnung an DIN 4762 wird der Rq = quadratische Mittenrauhwert mittels Weißlicht-Interferenz-Mikroskopie (Meßfläche: 0,6 x 0,5 mm) bestimmt. Formelmäßig drückt sich dies aus wie folgt:

$$R_a = \frac{(|Z_1|+|Z_2|+|Z_3|+...+|Z_n|)}{N}$$

$$R_q = \sqrt{\frac{(Z_1^2+Z_2^2+Z_3^2+...+Z_n^2)}{N}}$$

Das Herstellen von flachen Glaskeramikkörpern durch Floaten ist an sich bekannt.

Prinzipiell können alle bekannten gefloateten Glaskeramiken für die Herstellung des erfindungsgemäßen, reinigungsfreundlichen Glaskeramikkörpers verwendet werden.

Um eine besonders hohe Oberflächenqualität und damit eine entsprechend hohe Reinigungsfreundlichkeit zu erzielen, wird jedoch als Ausgangsglas für die Glaskeramik ein gefloatetes Glas verwendet, bei dem die Entstehung störender Oberflächendefekte beim Floaten durch die Begrenzung der Gehalte von Pt auf <300 ppb, Rh auf <3,0 ppb und ZnO auf <1,5 Gew.-%, sowie $SnO_2$ auf <1 Gew. % vermieden, sowie indem das Glas bei der Schmelze ohne Verwendung der üblichen Läutermittel Arsen- oder Antimonoxid geläutert wird.

Diese Gläser zeichnen sich somit durch eine Zusammensetzung aus, welche es erlaubt, die Entstehung störender Oberflächendefekte beim Floaten zu vermeiden. Floatanlagen bestehen üblicherweise aus der Schmelzwanne, in der das Glas geschmolzen und geläutert wird, einem Interface, welches den Übergang von der oxidischen Atmosphäre in der Schmelzwanne in die reduzierende Atmosphäre des nachfolgenden Anlageteils, des Floatteils, gewährleistet, in dem die Formgebung des Glases durch Aufgießen auf ein flüssiges Metall, meist Sn, in einer reduzierenden Atmosphäre von Formiergas, vorgenommen wird. Die Formgebung des Glases erfolgt durch Glattfließen auf dem Sn-Bad und durch sogenannte Top-Roller, die auf die Glasoberfläche eine Kraft ausüben. Während des Transportes auf dem Metallbad erkaltet das Glas und wird am Ende des Floatteiles abgehoben und in einen Kühlofen überführt.

Während der Bildung der Glasoberfläche und des Transportes im Floatbad können Wechselwirkungen zwischen Glas und Floatatmosphäre oder dem Sn-Bad zu störenden Oberflächendefekten führen.

Wenn das Glas mehr als 300 ppb Pt oder mehr als 30 ppb Rh in gelöster Form enthält, können sich durch die reduzierenden Bedingungen in der Glasoberfläche metallische Ausscheidungen von Pt- oder Rh-Partikeln bilden, die als wirksame Keime für große, bis 100 μm große, Hochquarz-Mischkristalle dienen und so eine störende Oberflächenkristallisation bewirken. Verwendung finden diese Materialien insbesondere als Elektroden, Auskleidung, Rührer, Transportrohre, Schieber, usw.. Bei Anlagen zur Durchführung des Verfahrens zur Herstellung vorgenannter Glaskeramik werden daher zur Vermeidung der Entstehung von Oberflächenkristallen Einbauten von Werkstoffen aus Pt bzw. Rh weitgehend vermieden und durch keramische Materialien ersetzt bzw. wird deren Belastung in der Schmelzwanne bzw. Interface so gestaltet, daß die genannten Gehalte nicht überschritten werden.

Der ZnO-Gehalt ist auf 1,5 Gew.-% begrenzt. Es hat sich gezeigt, daß unter den reduzierenden Bedingungen des Floatens das Zink in der Oberfläche des Glases verarmt. Es wird dabei angenommen, daß das Zink an der Glasoberfläche teilweise reduziert wird, wodurch es aufgrund des höheren Dampfdruckes von Zn gegenüber dem $Zn^{2+}$ in die Floatatmosphäre verdampft. Neben der für den Betrieb der Floatanlage unerwünschten Verdampfung und Abscheidung des Zn an kälteren Stellen, ist die ungleichmäßige Verteilung des Zn im Glas an der Entstehung von kritischen oberlächennahen Kristallbändern beteiligt. Diese Kristallbänder aus großen Hochquarz-Mischkristallen entstehen in Oberflächennähe dort, wo der Zn-Gehalt im Glas wieder nahezu auf den Ausgangswert angestiegen ist. Es ist daher zweckmäßig, den Ausgangswert von Anfang an klein zu halten.

Der Gehalt des Glases an $SnO_2$ ist auf weniger als 1 Gew.-% begrenzt. Durch Einwirkung der reduziernden Bedingungen im Floatteil wird das $SnO_2$ nämlich in der Glasoberfläche z.T. reduziert. Es bilden sich überraschenderweise Kügelchen aus metallischen Sn im Glas in der unmittelbaren Glasoberfläche, die sich beim Abkühlen oder Reinigen zwar leicht entfernen lassen, jedoch kugelförmige Löcher in der Glasoberfläche zurücklassen, die für die Anwendung äußerst störend sind.

Diese Kügelchen können vermieden werden, wenn der Gehalt an $SnO_2$ sehr gering ist.

Die vorgenannten Ausgangs-Gläser werden ohne Verwendung der für Gläser aus dem $Li_2O$-$Al_2O_3$-$SiO_2$-System üblichen Läutermittel Arsen- und/oder Antimonoxid geläutert. Unter der Einwirkung der reduzierenden Bedingungen beim Floaten werden nämlich die genannten Läutermittel unmittelbar an der Glasoberfläche reduziert und bilden störende und visuell auffällige metallische Beläge. Die Entfernung dieser für die Anwendung störenden und toxikologisch bedenklichen Beläge durch Schleifen und Polieren ist aus wirtschaftlichen Gründen unvorteilhaft. Um die Beläge zu vermeiden, wird daher zweckmäßig zum Erreichen einer geringen Blasenzahl wenigstens ein alternatives chemisches Läutermittel, wie z.B. $SnO_2$, $CeO_2$, Sulfatverbindungen, Chloridverbindungen, bevorzugt 0,2 - 0,6 Gew.-% $SnO_2$ der Glasschmelze zugesetzt ist. Alternativ kann die Glasschmelze auch physikalisch, z.B. mittels Unterdruck oder mittels Hochtemperatur >1750°C geläutert werden. Somit kann die erforderliche Blasenqualität über alternative Läutermittel und/oder alternative Läuterverfahren sichergestellt werden.

Bei dem Keramisieren ist dabei dafür Sorge zu tragen, daß die durch das Floaten erzielten niedrigen Rauhigkeitswerte nicht beeinträchtigt werden, indem z. B. die Keramisierung hängend oder durch eine Luftkissenkeramisierung erfolgt, d.h. generell ohne Berührung des zu keramisierenden Glaskörpers mit einer Unterlage.

Besondere Vorteile hinsichtlich einer sehr kleinen Rauhigkeit der Oberfläche der Glaskeramik werden durch ein gefloatetes, keramisiertes Aluminosilicatglas mit nachstehender Zusammensetzung in Gew.-% auf Oxidbasis erzielt.

| | |
|---|---|
| $Li_2O$ | 3,2-5,0 |
| $Na_2O$ | 0-1,5 |
| $K_2O$ | 0-1,5 |
| $\Sigma Na_2O+K_2O$ | 0,2-2,0 |
| $MgO$ | 0,1-2,2 |
| $CaO$ | 0-1,5 |
| $SrO$ | 0-1,5 |
| $BaO$ | 0-2,5 |
| $ZnO$ | 0-<1,5 |
| $Al_2O_3$ | 19-25 |
| $SiO_2$ | 55-69 |
| $TiO_2$ | 1,0-5,0 |
| $ZrO_2$ | 1,0-2,5 |
| $SnO_2$ | 0-<1,0 |
| $\Sigma TiO_2+ZrO_2+SnO_2$ | 2,5-5,0 |
| $P_2O_5$ | 0-3,0 |

Gemäß einer zweiten Weiterbildung weist das Glas in einer besonders bevorzugten Ausführungsform eine Zusammensetzung auf, in Gew.-% auf Oxidbasis von:

| | |
|---|---|
| $Li_2O$ | 3,5-4,5 |
| $Na_2O$ | 0,2-1,0 |
| $K_2O$ | 0-0,8 |
| $\Sigma Na_2O+K_2O$ | 0,4-1,5 |
| $MgO$ | 0,3-2,0 |
| $CaO$ | 0-1,0 |
| $SrO$ | 0-1,0 |
| $BaO$ | 0-2,5 |
| $ZnO$ | 0-1,0 |
| $Al_2O_3$ | 19-24 |
| $SiO_2$ | 60-68 |
| $TiO_2$ | 1,0-2,0 |
| $ZrO_2$ | 1,2-2,2 |
| $SnO_2$ | 0-0,6 |
| $\Sigma TiO_2+ZrO_2+SnO_2$ | 3,0-4,5 |
| $P_2O_5$ | 0-2,0 |

Dieses Glas wird mit besonderem Vorteil zum Herstellen des erfindungsgemäßen Glaskeramikkörpers verwendet, weil die entsprechende Oberfläche sehr reinigungsfreundlich ist.

**Patentansprüche**

1. Verglasung von gegenüber der Umgebung im Weltraum oder in Polarregionen abgekapselte Räumen, die betrieblich einem extrem hohen Temperaturgradienten ausgesetzt ist, bestehend aus einem Scheibenpaket, bei dem die der Umgebung zugewandte äußere Scheibe aus Glaskeramik besteht.

2. Verglasung nach Anspruch 1, **dadurch gekennzeichnet, daß** das Scheibenpaket, einschließlich der äußeren Glaskeramikscheibe, transparent ausgebildet ist.

3. Verglasung nach Anspruch 1 oder 2, **dadurch gekennzeichnet, daß** die äußere Glaskeramikscheibe mindestens eine Beschichtung besitzt.

4. Verglasung nach Anspruch 3, **dadurch gekennzeichnet, daß** die Beschichtungen aus einem Material sind, die eine Entspiegelung, und/oder Wärmereflektion, und/oder eine Beheizbarkeit und/oder eine Absorption von UV-Strahlen bewirken.

5. Verglasung nach einem der Ansprüche 1 bis 4, **dadurch gekennzeichnet, daß** die Glaskeramikscheibe eine porenfreie Oberfläche aufweist.

**6.** Verglasung nach Anspruch 5, **dadurch gekennzeichnet, daß** die Glaskeramikscheibe eine polierte Oberfläche besitzt.

**7.** Verglasung nach Anspruch 5, **gekennzeichnet durch** eine aus thermisch vorspannbarem, gefloateten Alumosilikatglas keramisierte gefloatete Glaskeramik, die eine Oberflächenstruktur mit einer Rauheit bestimmt **durch** den Mittenrauhwert $R_a \leq$ 0,02 µm und/oder den quadratischen Mittenrauhwert $R_q \leq 0,01$ µm aufweist.

**8.** Verglasung nach Anspruch 7, hergestellt aus einem Ausgangsglas das floatbar, thermisch vorspannbar und in eine Glaskeramik mit Hochquarz-Mischristallen oder Keatit-Mischkristallen umwandelbar ist, das einen Gehalt von weniger als 300 ppb Pt, weniger als 30 ppb Rh, weniger als 1,5 Gew.-% ZnO und weniger als 1 Gew.-% $SnO_2$ aufweist, das bei der Schmelze ohne Verwendung der üblichen Läutermittel Arsen- und/oder Antimonoxid geläutert ist und das seine Formgebung durch Aufgießen auf ein flüssiges Metall in einer reduzierenden Atmosphäre erhalten hat.

**9.** Verglasung nach Anspruch 8 mit einem gefloateten Aluminosilicatglas als Ausgangsglas.

**10.** Verglasung nach Anspruch 9, **gekennzeichnet durch** eine Zusammensetzung des Ausgangsglases (in Gew.-% auf Oxidbasis) von:

| | |
|---|---|
| $Li_2O$ | 3,2-5,0 |
| $Na_2O$ | 0-1,5 |
| $K_2O$ | 0-1,5 |
| $\Sigma Na_2O+K_2O$ | 0,2-2,0 |
| MgO | 0,1-2,2 |
| CaO | 0-1,5 |
| SrO | 0-1,5 |
| BaO | 0-2,5 |
| ZnO | 0-<1,5 |
| $Al_2O_3$ | 19-25 |
| $SiO_2$ | 55-69 |
| $TiO_2$ | 1,0-5,0 |
| $ZrO_2$ | 1,0-2,5 |
| $SnO_2$ | 0-<1,0 |
| $\Sigma TiO_2+ZrO_2+SnO_2$ | 2,5-5,0 |
| $P_2O_5$ | 0-3,0 |

ggf. mit Zusatz färbender Kompomenten, wie V-, Cr-, Mn-, Fe-, Co-, Cu-, Ni-, Se-, Cl-Verbindungen.

**11.** Verglasung nach Anspruch 10, **gekennzeichnet durch** eine Zusammensetzung des Ausgangsglases (in Gew.-% of Oxidbasis) von:

| | |
|---|---|
| $Li_2O$ | 3,5-4,5 |
| $Na_2O$ | 0,2-1,0 |
| $K_2O$ | 0-0,8 |
| $\Sigma Na_2O+K_2O$ | 0,4-1,5 |
| MgO | 0,3-2,0 |
| CaO | 0-1,0 |
| SrO | 0-1,0 |
| BaO | 0-2,5 |
| ZnO | 0-1,0 |
| $Al_2O_3$ | 19-24 |
| $SiO_2$ | 60-68 |
| $TiO_2$ | 1,0-2,0 |
| $ZrO_2$ | 1,2-2,2 |
| $SnO_2$ | 0-0,6 |
| $\Sigma TiO_2+ZrO_2+SnO_2$ | 3,0-4,5 |
| $P_2O_5$ | 0-2,0 |

ggf. mit Zusatz färbender Kompomenten, wie V-, Cr-, Mn-, Fe-, Co-, Cu-, Ni-, Se-, Cl-Verbindungen.

**12.** Verglasung nach einem der Ansprüche 9 bis 11, **gekennzeichnet dadurch**, daß für das Ausgangsglas zur Vermeidung der Entstehung eines schädlichen oberflächennahen Kristallbandes beim Floaten die Beziehung (in Gew.-%) : 3,2 x ZnO + $TiO_2 \leq 4,3$ gilt.

**13.** Verglasung nach einem der Ansprüche 9 bis 12, **gekennzeichnet durch** Gehalte von weniger als 200 ppb $Fe_2O_3$ und weniger als 2,5 Gew.-% $TiO_2$ im Ausgangsglas, um einer störenden Einfärbung im glasigen Zustand entgegenzuwirken und um eine Lichttansmission bei 4 mm Dicke von > 89% bevorzugt, > 90% zu erreichen.

**14.** Verglasung nach einem der Ansprüche 9 bis 13, **gekennzeichnet durch** einen Wärmeausdehnungskoeffizienten $\alpha_{20/300}$ zwischen 3,5 und 5,0 x $10^{-6}$/K, eine Transformationstempertur Tg zwischen 600 und 750° C und eine Verarbeitungstemperatur $V_A$ der Glaskeramik unter 1350° C.

**15.** Verglasung nach einem der Ansprüche 9 bis 14, **gekennzeichnet durch** einen Wärmeausdehungskoeffizienten der Glaskeramik mit Keatit-Mischkristallen als vorherrschende Kristallphase von weniger als 1,5 x $10^{-6}$/K.

**16.** Verglasung nach einem der Ansprüche 9 bis 14, **gekennzeichnet durch** einen Wärmeausdehungskoeffizienten der Glaskeramik mit Hochquarz-Mischkristallen als vorherrschende Kristallphase von (O $\pm$ 0,3) x $10^{-6}$/K, bevorzugt (O $\pm$ 0,15) x $10^{-6}$/K und eine Lichttransmission von > 80%.

EP 1 142 843 A1

**Europäisches Patentamt**

**EUROPÄISCHER RECHERCHENBERICHT**

Nummer der Anmeldung

EP 01 10 6774

### EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int.Cl.7) |
|---|---|---|---|
| X | US 5 496 640 A (BOLTON NELSON ET AL) 5. März 1996 (1996-03-05) * Spalte 6, Zeile 64 - Spalte 7, Zeile 13; Ansprüche 18,19 * * Spalte 8, Zeile 3 - Zeile 6 * | 1,2,5 | C03C10/12 C03C27/12 E06B3/66 |
| A | | 7-16 | |
| X | DE 25 59 556 A (JENAER GLASWERK SCHOTT & GEN) 7. April 1977 (1977-04-07) * Ansprüche * | 1-5 | |
| A | | 7-16 | |
| X | EP 0 581 610 A (NIPPON ELECTRIC GLASS CO) 2. Februar 1994 (1994-02-02) * Ansprüche 1-3 * | 1,2,5 | |
| A | | 7-17 | |
| X | DE 28 26 261 A (CIM) 4. Januar 1979 (1979-01-04) * Ansprüche * | 1,2,5 | |
| A | DE 197 29 336 A (VETROTECH SAINT GOBAIN INT AG) 14. Januar 1999 (1999-01-14) * Ansprüche * | 1-16 | RECHERCHIERTE SACHGEBIETE (Int.Cl.7) B32B E06B C03C |
| A | DE 44 17 496 A (SCHOTT GLASWERKE) 23. November 1995 (1995-11-23) * Ansprüche * | 1-16 | |
| A | PATENT ABSTRACTS OF JAPAN vol. 018, no. 288 (C-1207), 2. Juni 1994 (1994-06-02) & JP 06 056486 A (NIPPON ELECTRIC GLASS CO LTD), 1. März 1994 (1994-03-01) * Zusammenfassung * | 1-16 | |

Der vorliegende Recherchenbericht wurde für alle Patentansprüche erstellt

| Recherchenort | Abschlußdatum der Recherche | Prüfer |
|---|---|---|
| DEN HAAG | 5. Juli 2001 | Van Bommel, L |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument
& : Mitglied der gleichen Patentfamilie, übereinstimmendes Dokument

EPO FORM 1503 03.82 (P04C03)

**ANHANG ZUM EUROPÄISCHEN RECHERCHENBERICHT
ÜBER DIE EUROPÄISCHE PATENTANMELDUNG NR.**

EP 01 10 6774

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

05-07-2001

| Im Recherchenbericht angeführtes Patentdokument | | Datum der Veröffentlichung | Mitglied(er) der Patentfamilie | | Datum der Veröffentlichung |
|---|---|---|---|---|---|
| US 5496640 | A | 05-03-1996 | KEINE | | |
| DE 2559556 | A | 07-04-1977 | KEINE | | |
| EP 0581610 | A | 02-02-1994 | JP | 6048786 A | 22-02-1994 |
| | | | CA | 2101723 A | 31-01-1994 |
| | | | DE | 69321784 D | 03-12-1998 |
| | | | DE | 69321784 T | 15-04-1999 |
| | | | US | 5462805 A | 31-10-1995 |
| DE 2826261 | A | 04-01-1979 | FR | 2394394 A | 12-01-1979 |
| | | | BE | 868161 A | 15-12-1978 |
| | | | ES | 470864 A | 01-02-1979 |
| | | | IT | 1096729 B | 26-08-1985 |
| | | | JP | 54039428 A | 26-03-1979 |
| DE 19729336 | A | 14-01-1999 | CA | 2243038 A | 09-01-1999 |
| | | | CZ | 9802136 A | 13-01-1999 |
| | | | EP | 0890431 A | 13-01-1999 |
| | | | JP | 11092183 A | 06-04-1999 |
| | | | PL | 327301 A | 18-01-1999 |
| DE 4417496 | A | 23-11-1995 | FR | 2720062 A | 24-11-1995 |
| | | | GB | 2289496 A,B | 22-11-1995 |
| | | | SE | 505536 C | 15-09-1997 |
| JP 06056486 | A | 01-03-1994 | KEINE | | |

EPO FORM P0461

Für nähere Einzelheiten zu diesem Anhang : siehe Amtsblatt des Europäischen Patentamts, Nr.12/82